Europäisches Patentamt

European Patent Office

Office européen des brevets

(11) Numéro de publication: **0 213 981**
**A1**

## DEMANDE DE BREVET EUROPEEN

(21) Numéro de dépôt: 86401505.2

(22) Date de dépôt: 07.07.86

(51) Int. Cl.⁴: **H 02 K 9/06**

(30) Priorité: 09.08.85 FR 8512209

(43) Date de publication de la demande:
**11.03.87 Bulletin 87/11**

(84) Etats contractants désignés: **DE GB IT**

(71) Demandeur: **DUCELLIER ET CIE**
**3/5 Voie Félix Eboué**
**F-94000 Creteil (FR)**

(72) Inventeur: **Meuret, Jean-Pierre**
**13, Rue Paul Verlaine**
**F-93130 Noisy-le-Sec (FR)**

(74) Mandataire: **Habert, Roger**
**VALEO Service Propriété Industrielle 21 rue Auguste Blanqui**
**F-93406 Saint-Ouen (FR)**

(54) **Générateur de courant alternatif notamment de véhicules automobiles.**

㊱ Générateur de courant alternatif, notamment pour véhicules automobiles, comprenant un rotor constitué entre autre de deux éléments polaires à griffes 4a, 4b sur la face d'extrémité d'au moins un desquels est accolé un ventilateur centrifuge 7 du type comprenant un flasque 7a en forme de disque, approximativement à la périphérie duquel sont disposées une pluralité de pales de ventilation 7b, remarquable en ce que les pales de ventilation 7b du ventilateur 7 s'étendent obliquement vers l'élément polaire à griffes 4b, selon la pente d'un chanfrein 4e ménagé sur la périphérie de la face d'extrémité de l'élément polaire à griffes 4b.

FIG.4

EP 0 213 981 A1

# Description

## GENERATEUR DE COURANT ALTERNATIF NOTAMMENT DE VEHICULES AUTOMOBILES

L'objet de la présente invention concerne un générateur de courant alternatif, notamment pour véhicules automobiles, du type comprenant un stator maintenu entre deux paliers support, et d'un rotor placé à l'intérieur du stator, et monté à rotation sur les deux paliers support, rotor constitué entre autre de deux éléments polaires à griffes emprisonnant une bobine inductrice et sur la face d'extrémité d'au moins un desquels est accolé un ventilateur centrifuge du type comportant un flasque en forme de disque, approximativement à la périphérie duquel sont disposées une pluralité de pales de ventilation.

Dans ces générateurs de courant pour véhicules automobiles du type à ventilateur interne, il s'avère très difficile d'avoir des pales de ventilation ayant une surface assez importante permettant d'assurer une circulation d'air satisfaisant à un refroidissement correct dudit générateur de courant, de part les limitations de poids et d'encombrement imposées par les constructeurs d'automobiles. En effet, l'extension des pales de refroidissement est limitée latéralement par le palier d'extrémité d'une part, et par la pièce polaire sur laquelle ledit ventilateur est fixé, d'autre part. De plus, une augmentation du diamètre externe du ventilateur, ou une diminution de son diamètre interne, est à exclure, car ledit ventilateur doit avoir un diamètre externe inférieur au diamètre interne du palier d'extrémité, et le diamètre interne dudit ventilateur doit lui permettre une entrée d'air suffisant à assurer un brassage d'air satisfaisant au refroidissement nécessaire au bon fonctionnement dudit générateur de courant.

Par conséquent, des solutions ont été apportées en étendant la surface des pales de ventilation à l'intérieur des espaces libres proches desdites pales de ventilation. Ceci a pour effet d'obtenir des pales de ventilation ayant des formes complexes inadaptées pour leur obtention par des moyens de fabrication de grande diffusion ou aux vibrations dues aux forces qui s'exercent sur elles en rotation.

L'invention a pour but de pallier ces inconvénients en permettant une augmentation de la ventilation des organes internes de l'alternateur et conséquemment leur refroidissement sans modifier l'encombrement extérieur des moyens de ventilation tel le ventilateur.

L'invention concerne à cet effet un alternateur du type précité remarquable en ce que les pales de ventilation s'étendent obliquement vers l'élément polaire à griffes, selon la pente d'un chanfrein ménagé sur la périphérie de la face d'extrémité de l'élément polaire à griffes.

La description qui va suivre en regard des dessins annexés, fera mieux comprendre comment l'invention peut être réalisée.

- La figure 1 est une vue en coupe longitudinale de l'alternateur objet de l'invention.

- La figure 2 est un croquis explicatif de l'une des versions de l'invention.

- La figure 3 est un croquis explicatif de l'autre des versions de l'invention.

- La figure 4 est une vue générale de l'un des éléments polaires du rotor muni du ventilateur objet de l'invention.

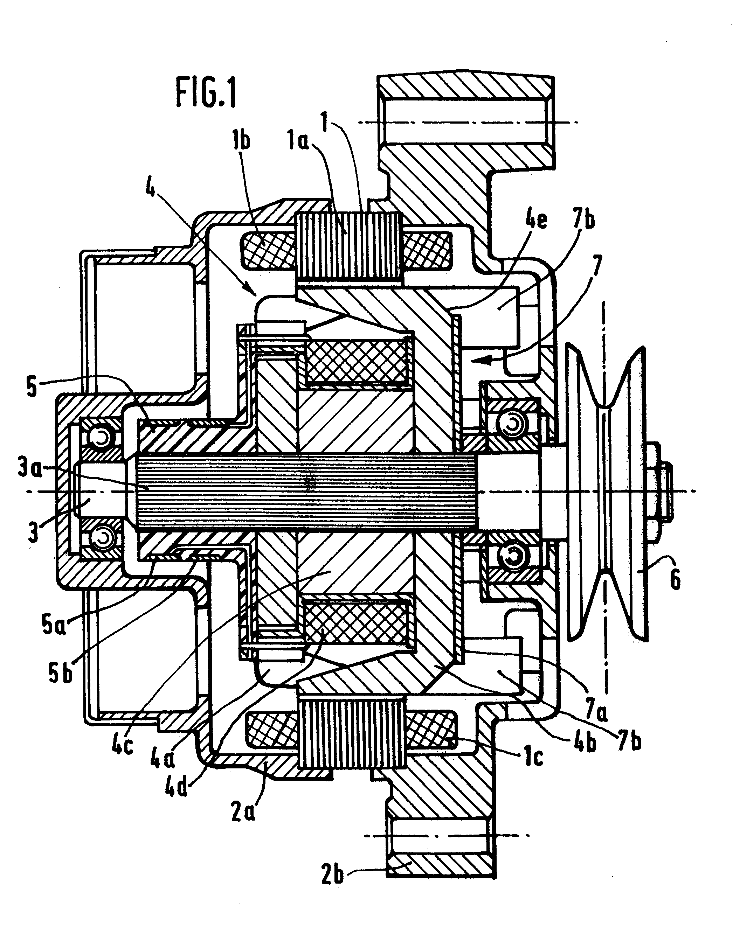

Selon un mode préféré de réalisation de l'invention, l'alternateur représenté à la figure 1, comporte un stator 1 constitué de manière connue d'un paquet de tôles 1a et d'enroulements de phases 1 b, le stator 1 étant maintenu en position, pincé entre deux paliers d'extrémités 2a et 2b dans lesquels tourne un arbre 3 portant un rotor 4 constitué de deux éléments polaires à griffes 4a et 4b emprisonnant un noyau central 4e sur lequel est placée une bobine inductrice 4d connectée à des bagues collectrices 5a et 5b serties sur un collecteur en matière isolante 5, bagues collectrices 5a, 5b sur lesquelles frottent des balais (non représentés). L'ensemble rotor 4, 5 est emmanché à force sur l'arbre 3 et maintenu à rotation grâce à des cannelures 5a ménagées sur l'arbre 3. Cet arbre 3 est entraîné par un moteur à combustion interne (non représenté) par l'intermédiaire d'une poulie 6. Un ventilateur 7 constitué d'un disque 7a et de pales 7b, est fixé à la pièce polaire 4b du rotor 4 par tout moyen connu, tels, que par exemple, des vis, des rivets ou par soudure électrique. Les pales 7b s'étendent obliquement selon un chanfrein 4e ménagé sur la périphérie de la face d'extrémité de la pièce polaire 4b. Ce chanfrein 4e est obtenu par un procédé quelconque d'usinage mécanique, que la pièce polaire 4b vienne de forgeage ou de moulage. L'extension des pales 7b aboutit à une augmentation de leur surface suite à l'augmentation de leur largeur à la périphérie externe du ventilateur 7, là où la pale de ventilation 7b est en regard avec la tête 1c des bobines 1b du stator 1.

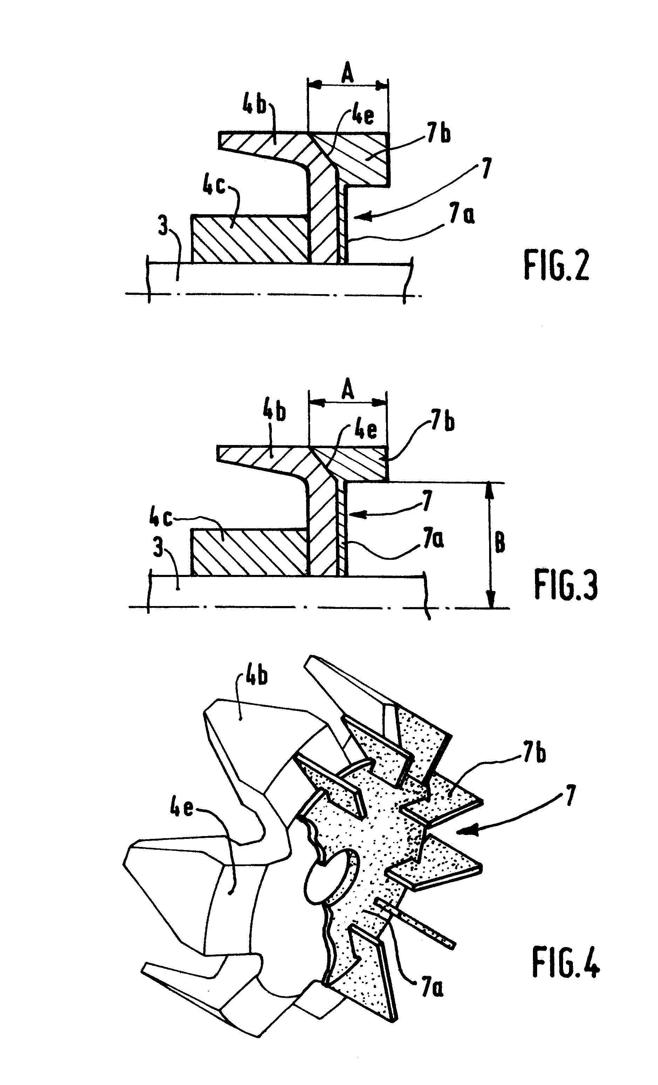

A la figure 2 est représentée schématiquement une pièce polaire à griffes 4b, un noyau 4c et un ventilateur 7, l'ensemble monté sur un arbre 3. La surface de la pale de ventilation 7b est agrandie grâce au chanfrein 4e qui permet l'augmentation de la largeur de la pale 7b (cote A). Il est à noter que l'augmentation de surface des pales 7b du ventilateur 7 n'entraîne pas une augmentation du diamètre extérieur dudit ventilateur 7.

A la figure 3 est représentée une autre variante de la pale 7b du ventilateur 7 selon laquelle, la surface supplémentaire apportée, grâce au chanfrein 4e est compensée par une augmentation du diamètre B. Cette dernière disposition assure une augmentation du diamètre d'entrée d'air sans diminution de la surface de la pale 7b du ventilateur 7.

La figure 4 montre le disque 7a portant les pales de ventilation 7b s'étendant sur le chanfrein 4e de la pièce polaire 4b.

## Revendications

Générateur de courant alternatif, notamment pour véhicules automobiles, du type comprenant un stator (1) maintenu entre deux paliers support (2a, 2b), et d'un rotor (4) placé à l'intérieur du stator (1) et monté à rotation sur les deux paliers support (2a, 2b), rotor (4) constitué entre autre de deux éléments polaires à griffes (4a, 4b) emprisonnant une bobine inductrice (4c) et sur la face d'extrémité d'au moins un desquels est accolé un ventilateur centrifuge (7) du type comprenant un flasque (7a) en forme de disque, approximativement à la périphérie duquel sont disposées une pluralité de pales de ventilation (7b), caractérisé en ce que les pales de ventilation (7b) du ventilateur (7) s'étendent obliquement vers l'élément polaire à griffes (4b), selon la pente d'un chanfrein (4e) ménagé sur la périphérie de la face d'extrémité de l'élément polaire à griffes (4b).

– Leerseite –

FIG.1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| Y | DE-A-3 009 815  (ROBERT BOSCH) <br> * Page  9, lignes 17-20; figures 1,2 * | 1 | H 02 K    9/06 |
| | --- | | |
| Y | US-A-3 235 756  (ANDERSON) <br> * Colonne 5, ligne 65  -  colonne 6, ligne 10; figure 4 * | 1 | |
| | --- | | |
| A | FR-A-2 502 860  (MITSUBISHI DENKI) <br> * Figure 2 * | 1 | |
| | ----- | | |

DOMAINES TECHNIQUES
RECHERCHES (Int. Cl 4)

H 02 K

Le présent rapport de recherche a été établi pour toutes les revendications

| Lieu de la recherche | Date d'achèvement de la recherche | Examinateur |
|---|---|---|
| LA HAYE | 28-10-1986 | TIO K.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& - membre de la même famille, document correspondant

OEB Form 1503 03 82